# EUROPÄISCHE PATENTSCHRIFT

(11) **EP 0 704 347 B1**
(45) Veröffentlichungstag und Bekanntmachung des Hinweises auf die Patenterteilung: **30.12.1998**
(21) Anmeldenummer: 95113832.0
(22) Anmeldetag: 04.09.1995
(51) Int. Cl.: B60R 21/26

(54) **Gasgenerator**
Gas generator
Générateur de gaz

(30) Priorität: 23.09.1994 DE 4433935
(43) Veröffentlichungstag der Anmeldung: 03.04.1996
(73) Patentinhaber: TRW Airbag Systems GmbH & Co. KG, 84544 Aschau am Inn (DE)
(72) Erfinder: Bernau, Klaus, D-83564 Soyen (DE); Seidel, Harald, D-91233 Neunkirchen (DE)
(74) Vertreter: Kitzhofer, Thomas, Dipl.-Ing.

(56) Entgegenhaltungen:
- EP-A- 0 359 902
- US-A- 5 366 239

## Beschreibung

Die Erfindung betrifft einen Gasgenerator, insbesondere für passive Rückhaltesysteme in Kraftfahrzeugen nach dem Oberbegriff des Patentanspruches 1.

Es sind Rückhaltesysteme für Fahrzeuginsassen bekannt, die mit einem Gassack (Airbag) ausgestattet sind, der durch ein von einem Gasgenerator erzeugten Gas aufgeblasen wird. Dabei sind im wesentlichen zwei Arten von Gasgeneratoren bekannt, die brennbare feste treibstoffgaserzeugende Zusammensetzungen zum Aufblasen des Airbags verwenden.

So ist zum einen aus der DE-A-4 208 844 (A1) ein Gasgenerator bekannt, dessen Brenn- und Filterkammern ringförmig um eine Anzündeinheit angeordnet und aus schalenförmigen Einzelteilen aufgebaut sind. Die Verbindung eines schalenförmigen Unterteils mit einem schalenförmigen Oberteil zur Bildung des Gasgeneratorgehäuses erfolgt mittels zwei Gewinden, nämlich einerseits zur Verbindung der zylinderförmigen Innenwände und andererseits zur Verbindung der zylinderförmigen Außenwände des Unter- und Oberteils. Da bei der Montage des Gasgeneratorgehäuses diese beiden Gewinde gleichzeitig greifen müssen, sind für diese äußerst geringe Toleranzen zulässig, da diese Gewinde ansonsten nie korrekt zusammenpassen. Dies führt ferner dazu, daß diese für die Gewinde erforderlichen engen Toleranzen zu hohen Herstellungskosten des Unter- und Oberteils führen. Ein weiterer Nachteil bei der Verwendung von Gewinden liegt darin, daß zur Sicherung derselben sowie zur Abdichtung des Gasgeneratorgehäuses Sicherungsmittel, wie beispielsweise Klebstoff, Einlagen, Krallen und Stifte erforderlich sind.

Zum anderen ist ein Gasgenerator mit einem zylindrischen Aufbau aus der DE-A-4 338 536 (A1) bekannt, bei dem ein langgestreckter Zylinder die Brennkammer darstellt und ein diesen Brennkammerzylinder umschließenden Zylinder die Auslaßöffnungen aufweist. Bei diesem bekannten Gasgenerator wird der Brennkammerzylinder stirnseitig mit einem Deckel verschlossen, wobei als Verbindungsmittel ebenfalls ein Gewinde vorgesehen ist. Die Versendung eines solchen Gewindes führt ebenfalls zu den schon oben aufgeführten Nachteilen.

Aus der EP-A-0 359 902 (A2) ist ein gattungsgemäßer Gasgenerator, genauer gesagt ein rohrförmiger Gasgenerator bekannt, der einen modularen Aufbau aufweist. Der Gasgenerator hat eine zentrale Brennkammer und zwei Filterkammern mit eigenem Gehäuse, die an jeweils einem axialen Ende des Brennkammergehäuses durch eine Schraubverbindung, eine Schweißverbindung oder ähnliche Fügeverfahren befestigt sind. Diese Verfahren sind jedoch ebenso wie eine Schraubverbindung sehr aufwendig.

Der Erfindung liegt daher die Aufgabe zugrunde, einen Gasgenerator der eingangs genannten Art so zu verbessern, daß seine Einzelteile durch ein kostengünstiges Befestigungsmittel schnell aneinander arretiert werden können.

Dies wird bei einem Gasgenerator der eingangs genannten Art dadurch erreicht, daß die Einzelteile durch erste und zweite mechanische Rastmittel miteinander verbunden sind, wobei das erste Rastmittel durch wenigstens eine Klinke und das zweite Rastmittel durch wenigstens eine Hinterschneidung, die von der Klinke erfaßt wird, gebildet ist.

Bei einer Ausführungsform des erfindungsgemäßen Gasgenerators, dessen Gehäuse aus einem Ober- und Unterteil aufgebaut ist, weisen die Innen- und Außenwände des Unterteils erste mechanische Rastmittel und die Innen- und Außenwände des Oberteils mechanische Rast-mittel auf, die derart Zusammenwirken, daß ein Klinkenverschluß entsteht.

Eine Ausführungsform des erfindungsgemäßen zylinderförmigen Gasgenerators sieht vor, daß zur Verbindung des Deckels mit dem Brennkammerzylinder ebenfalls erste und zweite mechanische Rastmittel vorgesehen sind, die derart zusammenwirken, daß ein Klinkenverschluß entsteht.

Die Verwendung eine Klinkenverschlusses anstelle eines Gewindes führt zunächst dazu, daß die Einzelteile der Gasgeneratoren billiger herstellbar sind, da vier Gewindeteile in ihrer Herstellung kostenintensiver sind als die erfindungsgemäßen Rastmittel. Auch entfällt der Nachteil bei Verwendung von Gewinde, wo die Dichtigkeit des Gehäuses vom Drehmoment beim Verschrauben abhängig ist.

Weiterhin ist bei Verwendung der erfindungsgemäßen Rastmittel beim Zusammenbau des aus Ober- und Unterteil bestehenden Gehäuses dessen Bauhöhe immer eindeutig bestimmt, was bei Verwendung von Gewinde nicht gegeben ist, da dort die Bauhöhe von der Schraubtiefe abhängig ist.

Ferner führt die Verwendung von Rastmitteln zu einer einfacheren Montage des erfindungsgemäßen Gasgenerators, wodurch weitere Kostenvorteile erzielt werden. Gleichzeitig wird der Ausschuß bei der Montage eines aus Ober- und Unterteil aufgebauten Gasgenerators geringer, da die im Stand der Technik verwendeten vier Gewindeteile schon bei kleinsten Toleranzschwankungen nicht mehr zusammenpassen.

Bei einem weiteren Ausführungsbeispiel des aus einem Ober- und Unterteil bestehenden erfindinngsgemäßen Gasgenerators weist die Anzündeinheit einen umlaufenden Wulst auf, der in eine von dem Ober- und Unterteil gebildete Ringnut aufgenommen wird. Somit ergibt sich auch bei der Montage der Anzündeinheit eine gegenüber der Verwendung von Gewinde- oder Taumelnieten einfachere Montage.

Bei einer vorteilhaften Weiterbildung des zylinderförmigen Gasgenerators wird die Verbindung der Anzündeinheit mit dem Brennkammerzylinder über einen Klinkenverschluß hergestellt. Damit ergibt sich eine weitere Vereinfachung der Einzelteile, mit der Folge geringerer Herstellkosten der Einzelteile als auch geringerer Montagekosten.

Um die erfindungsgemäßen Gasgeneratoren dicht zu machen, sind im Bereich der Rastmittel Dichtelemente, insbesondere O-Ringe vorgesehen.

Gemäß einer weiteren Ausführungsform des erfindungsgemäßen Gasgenerators sind die mechanischen Rastmittel mehrere geschlitzte Klinken, so daß hierdurch eine Federwirkung entsteht und ein sicheres Funktionieren des Rastmechanismus gewährleistet ist.

Schließlich kann bei einer anderen vorteilhaften Weiterbildung der Erfindung als Klinkenverschluß ein Dreh-Bajonett-Verschluß vorgesehen werden.

Im folgenden soll die Erfindung anhand von Ausführungsbeispielen im Zusammenhang mit den Zeichnungen dargestellt und erläutert werden. Es zeigen:
- Figur 1: eine Schnittdarstellung eines Ober- und Unterteils eines erfindungsgemäßen Gasgenerators,
- Figur 2: eine Schnittdarstellung eines montierten Gasgenerators gemäß der Figur 1,
- Figur 3: ein weiteres Ausführungsbeispiel des erfindungsgemäßen Gasgenerators mit zylinderförmiger Brennkammer und
- Figur 4: eine Schnittdarstellung des Gasgenerators gemäß einem Schnitte A-A nach Figur 3.

Funktionsähnliche oder baugleiche Elemente sind in den Figuren mit den gleichen Bezugszeichen versehen.

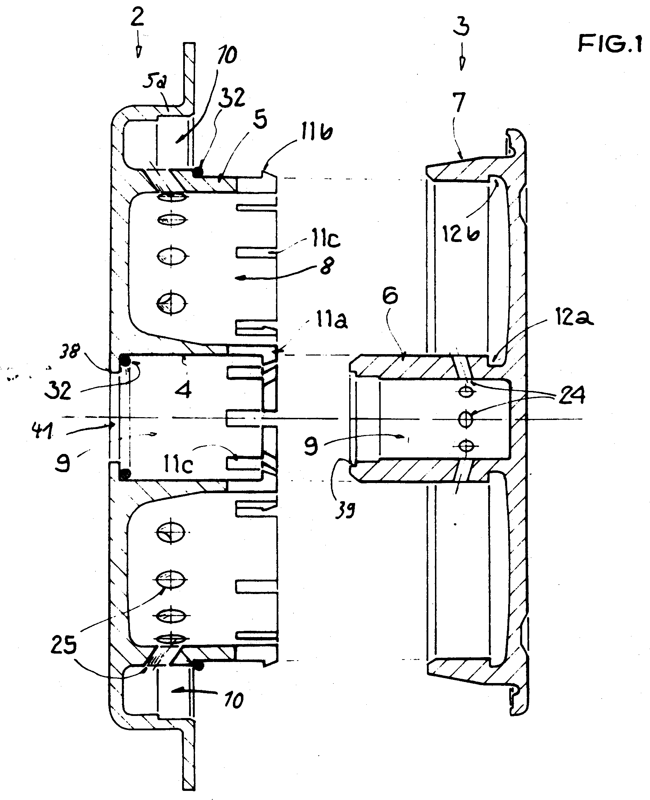

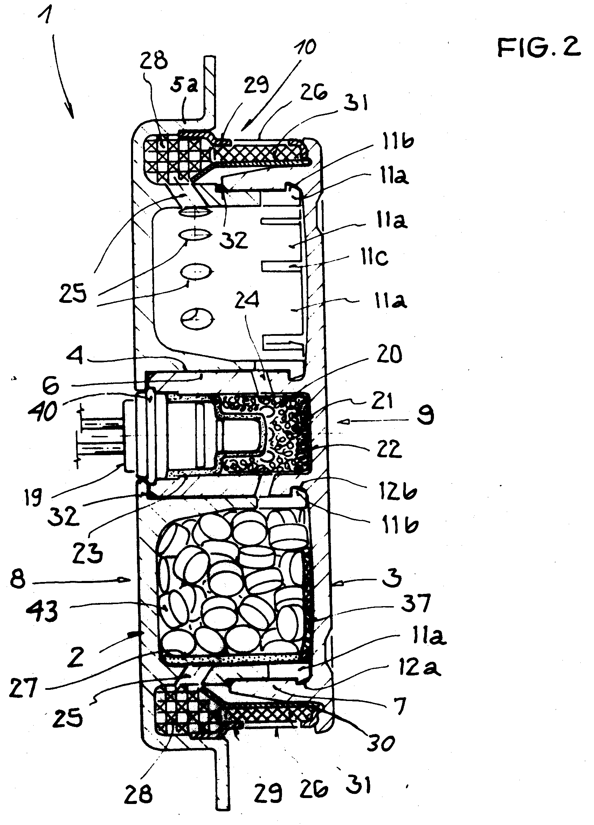

Die Figur 1 zeigt ein Unterteil 2 und ein Oberteil 3, die jeweils kreissymmetrisch ausgebildet sind, um im zusammengebauten Zustand ein Gehäuse 1 gemäß Figur 2 für einen Gasgenerator zu bilden, der eine gaserzeugende Zusammensetzung 43 aufnimmt.

Dieses Gehäuse 1 gemäß Figur 2 enthält eine zylinderförmige Zündkammer 9 zur Aufnahme einer Anzündeinheit 19 und einer Anzündmischung 20, wobei die Rotationsachse dieser Zündkammer 9 die Symmetrieachse des rotationssymmetrischen Gehäuses 1 bildet. Zur Aufnahme des gaserzeugenden Gemisches in Form von Tabletten 43 legt sich um diese Zündkammer 9 eine toroidförmige Brennkammer 8. Schließlich bildet eine weitere Toroidzone eine Filterkammer 10.

Zur Bildung dieses Kammersystems dienen die in Figur 1 dargestellten Unter- und Oberteile 2 und 3, die jeweils schalenförmig ausgebildet sind. Hierzu weisen das Ober- und Unterteil 2 und 3 jeweils eine zylinderförmige Innenwand 4 bzw. 6 und eine zylinderförmige Außenwand 5 bzw. 7 auf, die jeweils koaxial zueinander ausgebildet sind. Die Innenwände 4 und 6 des Unter- und Oberteils 2 und 3 bilden zusammen die Zündkammer 9, während die beiden Außenwände 5 und 7 zusammen die äußere Begrenzung der Brennkammer 8 bilden. Die Filterkammer 10 wird schließlich von einer an das Unterteil 2 angeflanschten Filterkammerwand 5a und einem in Figur 2 gezeigten Teil 29 gebildet.

Beim Zusammenbau der beiden Teile 2 und 3 werden die Innenwände 4 und 6 sowie die Außenwände 5 und 7 konzentrisch ineinander geschoben, weshalb der äußere Durchmesser der zylindrischen Innenwand 6 des Oberteils 3 dem Innendurchmesser der zylinderförmigen Innenwand 4 des Unterteils 2 entspricht. In entsprechender Weise sind auch die zylinderförmigen Außenwände 5 und 7 des Unterteils 2 und des Unterteils 3 ausgebildet, so daß die Außenwand 7 des Oberteils 3 die Außenwand 5 des Unterteils 2 umschließt.

Um eine feste Verbindung zwischen dem Unterteil 2 und dem Unterteil 3 zu erzielen, weisen dieselben Rastmittel auf. Diese Rastmittel bestehen im einzelnen aus an den äußeren Rändern der zylinderförmigen Innenwand als auch der zylinderförmigen Außenwand angeordneten Rastklinken 11a und 11b, die geschlitzt (siehe Bezugszeichen 11c) ausgebildet sind, so daß eine Federwirkung entsteht. Diese Federwirkung ist erforderlich, da beim Zusammenschieben des Unterteils 2 und des Oberteils 3 die Klinkenelemente 11a nach außen und die Klinkenelemente 11b nach innen vorgespannt werden, so daß im zusammengeschobenen Zustand die Klinkenelemente 11a und 11b in im Oberteil 3 vorgesehene Hinterschneidungen 12a und 12b einrasten. Die Klinkenteile 11a und 11b spannen sich während des Zusammendrückens des Unterteils 2 und des Oberteils 3 ca. 1,5 - 2 mm vor.

Um die Anzündeinheit 19 (vgl. Figur 2) in das Gehäuse einzubringen, weist das Unterteil 2 im Bodenbereich der Zündkammer 9 eine Öffnung 41 auf, die an den Durchmesser der Anzündeinheit 19 angepaßt ist. Im Stand der Technik wird diese Anzündeinheit 19 nach dem Zusammenbau des Unter- und Oberteils als Taumelniete eingebracht oder mittels eines Gewindes eingeschraubt. Bei dem vorliegenden Beispiel gemäß den Figuren 1 und 2 wird dagegen die Anzündeinheit 19 in einfacher Weise folgendermaßen eingebaut. Hierzu ist im Randbereich der Öffnung 41 im Bodenbereich der Zündkammer 9 des Unterteils 2 ein umlaufender Sims 38 angeordnet. Dieser Sims 38 bildet zusammen mit einer umlaufenden Stufe 39, die am Rand der zylinderförmigen Innenwand 6 des Oberteils 3 angeordnet ist, im zusammengebauten Zustand des Unter- und Oberteils 2 und 3 eine umlaufende Nut. Ein entsprechender am Umfang der Anzündeinheit 19 ausgebildeter Wulst 40 wird von dieser Ringnut 42 aufgenommen, so daß im zusammengebauten Zustand ein Paßsitz entsteht.

Um die Dichtigkeit des Gehäuses 1 sicherzustellen, wird im innenliegenden Eckbereich des Sims 38 als Dichtelement ein O-Ring 32 eingelegt. Ein zweiter Dichtring 32 liegt in einer umlaufenden Stufe, die auf der äußeren Fläche der zylinderförmigen Außenwand 5 des Unterteils 2 angeordnet ist. Im zusammengebauten Zustand stößt das freie Ende der zylinderförmigen Außenwand 7 des Oberteils 3 an diese mit dem O-Ring versehene Stufe.

Vor dem Zusammenfügen des Unter- und Oberteils 2 und 3 zu einem vollständigen Gehäuse 1 nach Figur 2 erfolgt zunächst eine Vormontierung des Unterteils 2 bzw. des Unterteils 3.

Zunächst wird in der Brennkammer 8 des Unterteils 2 ein Verdämmband sowie ein Grobfilter 27 eingebracht, das gemäß Figur 2 im Bereich von in der zylinderförmigen Außenwand 5 angeordneten Auslaßöffnungen 25 angeordnet ist. Anschließend wird die gaserzeugende Masse in Form von Tabletten 43 in die Brennkammer 8 eingefüllt. Anstatt ein Verdämmband zu verwenden, können diese Tabletten 43 auch in einer Vorverpackung aus Aluminium eingebracht werden, wobei diese Vorverpackung toroidförmig an die Brennkammer angepaßt ist. Ferner wird noch ein Volumenausgleichsmittel 37 eingelegt, das auch als Dämpfungskissen wirkt.

Das Oberteil 3 wird vormontiert, indem zunächst in die Zündkammer eine äußere Verdämmhülse 22 eingelegt wird. Anschließend wird Frühzündpulver 21 eingefüllt und anschließend eine Separierfolie eingedrückt. Nun wird das eigentliche Zündpulver, die Anzündmischung 20 eindosiert und eine innere Verdämmhülse 23 eingepreßt. Schließlich wird noch die Anzündeinheit 19, die die eigentliche Zündpille mit einem Anzündträger enthält, ebenfalls eingepreßt, so daß der Wulst 40 an der umlaufenden Stufe 39 anliegt.

Nun können das vormontierte Unterteil sowie das vormontierte Oberteil 3 zusammengedrückt werden, wobei die Klinkenteile 11a und 11b sich während des Zusammendrückens vorspannen. Beim Einrasten der Klinkenteile 11a und 11b in die Hinterschneidungen 12a und 12b verformen sich die Dichtelemente 32 und bleiben auch im Endzustand verformt, so daß die erforderliche Dichtigkeit automatisch sichergestellt ist.

Die Höhe des Gehäuses 1 ist nun durch den Klinkenmechanismus eindeutig definiert, und hängt nicht mehr wie im Fall der Verwendung eines Gewindes von dessen Schraubtiefe ab.

Um die Filterkammer 10 zu vervollständigen, wird eine Metallwolle 28 als Grobfilter im Bereich der Filterkammerwand 5a eingebracht, ein Leitblech 30 mit einem Feinfilter 31 installiert und anschließend ein Blech 26 mit Auslaßöffnungen 26 eingeklipst.

Dieser nun fertig montierte Gasgenerator 1 gemäß Figur 2 kann nun über einen an der Filterkammerwand 5a befestigten umlaufenden Flansch mit einem aufblasbaren Sack als Airbag also auch gleichzeitig mit der Halterung eines Lenkrades eines Kraftfahrzeuges verbunden werden.

Der in dem Ausführungsbeispiel gemäß den Figuren 1 und 2 verwendete Klinkenverschluß kann auch durch einen Dreh-Bajonett-Verschluß ersetzt werden.

Im folgenden soll kurz die Funktionsweise des Gasgenerators gemäß Figur 2 erläutert werden. Nach dem Erkennen eines Aufpralls erhält die elektrische Anzündeinheit 19 ein Signal zum Zünden der Anzündmischung 20, wodurch die äußere und innere Verdämmhülse 22 und 23 bei einem bestimmten Druck aufreißt, um eine Zündflamme über in der zylinderförmigen Innenwand 6 angeordnete Bohrungen 24 in die Brennkammer 8 übertreten zu lassen. Hierdurch entzünden sich die Tabletten 43 zur Erzeugung des erforderlichen Treibgases, wodurch das Verdämmband oder bei Verwendung der Vorverpackung dieselbe aufgerissen wird und das Treibgas nach Durchtritt durch das Grobfilter 27 durch die Auslaßöffnungen 25 in die Filterkammer 10 eintritt. Diese Öffnungen 25 sind so ausgerichtet, daß das Treibgas aus der Brennkammer 8 direkt auf die Metallwolle 28 trifft, wo flüssige und feste Teilchen aus dem Gas abgeschieden werden. Ein Kondensationsbeginn für flüssige Teilchen aus dem Gasstrom erfolgt bereits an dem Grobfilter 27, das vor den Auslaßöffnungen 25 liegt. Nachdem das Treibgas auf die Metallwolle 28 aufgetroffen ist, wird es durch das Leitblech 30 umgelenkt und auf das Feinfilter 31 geführt. Anschließend tritt das Treibgas durch die Öffnungen 26 in den aufblasbaren Sack ein.

Sowohl die Ausblasöffnungen 26 als auch die Auslaßöffnungen 24 können auf ihrer Innenseite von dünnen Berstfolien abgedichtet sein, damit von außen keine Feuchtigkeit eindringen kann.

Für das Gehäuse 1 des erfindungsgemäßen Gasgenerators nach den Figuren 1 und 2 wird als Gehäusematerial Aluminium verwendet.

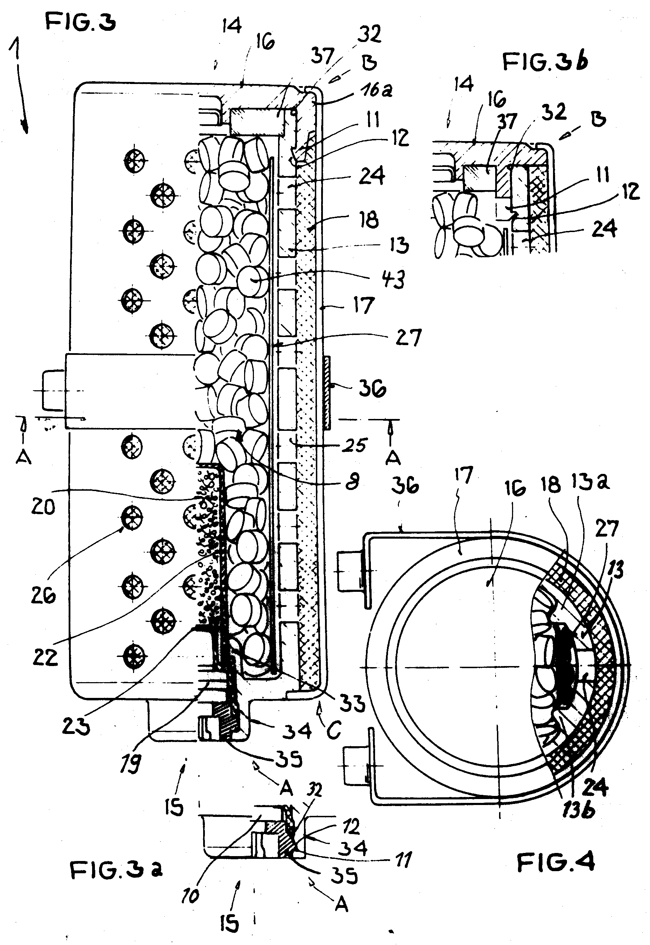

Der Gasgenerator gemäß den Figuren 3 und 4 weist eine langgestreckte zylindrische Form auf und besteht aus folgenden Teilen: einem Brennkammerzylinder 13, der zur Bildung einer Brennkammer 8 den gaserzeugenden Treibstoff in Form von Tabletten 43 aufnimmt, einem Deckel 16 für den Verschluß der einen stirnseitigen Öffnung 14 des Brennkammerzylinders 13, einer Anzündeinheit 19, die durch die andere stirnseitige Öffnung 15 des Brennkammerzylinders 13 in die Brennkammer 8 ragt und dieselbe verschließt sowie einen den Brennkammerzylinder 13 umschließenden äußeren Zylinder 17, wobei in dem Zwischenraum dieser beiden Zylinder 13 und 17 Filtermittel 18 angeordnet sind.

Der Deckel 16 weist einen umlaufenden Rand 16a auf, der den Randbereich an der Öffnung 14 des Brennkammerzylinders 18 überstülpt, wobei dieser Randbereich 16a mit Klinken 11 versehen ist, die beim Überstülpen des Deckels 16 über die Öffnung 14 des Brennkammerzylinders 13 in auf dem Mantel des Brennkammerzylinders 13 eingebrachte Aussparungen 12 einrastet. Hierzu sind diese Rastklinken 11 geschlitzt ausgebildet, um die notwendige Federwirkung beim Einrasten sicherzustellen. Um die gewünschte Dichtigkeit des Gehäuses 1 zu erzielen, wird vor der Montage dieses Deckels 16 in dessen inneren Eckbereich ein Dichtungsmittel, beispielsweise ein O-Ring 32 eingelegt.

Alternativ kann der Deckel 16 auch gemäß Figur 3b mit Klinken 11 versehene Ränder aufweisen, die jedoch in auf der Innenfläche des Brennkammerzylinders 13 angeordneten Ausnehmungen 12 eingreifen bzw. einrasten. Auch bei dieser Ausführung sind die Klinken 11 geschlitzt ausgebildet. Zur Abdichtung ist ebenfalls ein O-Ring 32 vorgesehen.

Schließlich kann der Deckel 16 auch mit zwei konzentrisch umlaufenden Rändern 16a versehen werden (in den Figuren nicht dargestellt), die jeweils geschlitzte Klinken 11 aufweisen. Beim Einführen eines solchen Deckels in die Öffnung 14 des Brennkammerzylinders 13 werden die Klinken am äußeren Rand nach außen und die Klinken am inneren Rand nach innen vorgespannt und rasten dann gleichzeitig in auf der äußeren Oberfläche als auch auf der inneren Oberfläche des Brennkammerzylinders angeordneten Ausnehmungen ein. Hiermit wird ein Verschluß mit besonders hoher Dichtigkeit erzielt.

Die zweite stirnseitige Öffnung 15 des Brennkammerzylinders 18 weist einen kleineren Durchmesser als der Brennkammerzylinder auf und ist an den Durchmesser der Anzündeinheit 19 angepaßt. Um diese Anzündeinheit 19 in dem Brennkammerzylinder zu befestigen, ist im Randbereich der Öffnung 15 sowohl ein innerer Flansch 33 als auch ein äußerer Flansch 34 vorgesehen. So weist der innere Flansch 33 einen inneren Anschlag für eine äußere Verdämmhülse 22 auf. Eine innere Verdämmhülse 23 wird durch den von dem inneren und äußeren Flansch 33 und 34 gebildeten zylinderförmigen Raum eingepreßt und erhält ihren Sitz durch einen in dem äußeren Flansch 34 angeordneten Absatz. Schließlich wird die eigentliche Anzündeinheit 19 mit Zündpille und Anzünderträger und einem Verschlußelement 35 eingeführt, wobei dessen Befestigung durch eine Umbördelung am äußeren Rand des äußeren Flansches 34 sichergestellt ist (vgl. Bezugszeichen A).

Zur Sicherstellung eines festen Sitzes der Anzündeinheit 19 kann anstelle der Umbördelung A auch ein Klinkenverschluß gemäß Figur 3a verwendet werden. Hierzu wird das Verschlußelement 35 mit einer umlaufenden Klinke 11 versehen, so daß beim Einführen des Anzündelementes 19 mit dem Verschlußelement 35 diese Klinke 12 in eine im Bereich des äußeren Flansches 34 angeordnete Stufe 12 einrastet. Zur Sicherstellung der erforderlichen Dichtigkeit ist im Bereich dieser Stufe 12 ein Dichtelement, beispielsweise ein O-Ring 32 vorgesehen. Um beim Einführen des Anzündelementes 19 eine Federwirkung zu erzielen, kann der die Klinken 11 tragende Bereich des Verschlußelementes geschlitzt ausgebildet sein.

Die Funktionsweise des Gasgenerators gemäß den Figuren 3 und 4 soll im folgenden kurz dargestellt werden. Nachdem die Anzündeinheit 19 ein elektrisches Signal zur Zündung der Anzündmischung 20 erhalten hat, wird diese Anzündmischung 20 entzündet, mit der Folge, daß auch das Treibstoffmittel 43 zur Erzeugung eines Treibgases entzündet wird. Dieser Treibstoff 43 ist in Tablettenform in dem Brennkammerzylinder 13 enthalten, wobei auch Volumenausgleichsmittel 37 vorgesehen sind.

Das von den Tabletten 43 erzeugte Treibgas strömt zunächst durch einen Grobfilter 27, der im Innenwandbereich des Brennkammerzylinders 13 angeordnet ist. Dieser Grobfilter 27 ist dabei nur im Bereich der in dem Brennkammerzylinder 13 angeordneten Gasöffnungen 24 angeordnet, wie es aus der Figur 4 ersichtlich ist. Zur Befestigung dieses Grobfilters 27 dienen dabei zwei in den Innenraum des Brennkammerzylinders 13 ragende Erhebungen 13a und 13b, so daß dieses Grobfilter zwischen diese Erhebungen eingeklipst werden kann. Nach dem Durchtritt des Treibgases durch die Gasöffnungen 24 trifft es auf den rohrförmigen Filter 18 und wird anschließend durch Ausblasöffnungen 26 in dem äußeren Zylinder 17 in einen nicht dargestellten Luftsack geleitet. Dieser äußere Zylinder 17 wird jeweils mit einer Umbördelung B und C mit dem Deckel 16 bzw. dem Brennkammerzylinder 13 verbunden.

Zur Befestigung des Gasgenerators gemäß den Figuren 3 und 4 ist eine halbseitig um den äußeren Zylinder 17 geführte Lasche vorgesehen, an die Anschlußstücke angeflanscht sind.

Der in den Figuren 3 und 4 gezeigte Rohrgenerator besteht aus einem aus Aluminium gefertigten Brennkammerzylinder 13 und einem aus Stahlblech geformten äußeren Zylinder 17, wobei auch der mit den Rastmitteln versehene Deckel 16 aus Aluminium gefertigt ist.

## Patentansprüche

1. Gasgenerator, insbesondere für passive Rückhaltesysteme in Kraftfahrzeugen, bestehend aus einem Gehäuse (1) mit mehreren Einzelteilen (2, 3; 13, 16, 19) zur Bildung einer Zündkammer (9) und einer Brennkammer (8), dadurch gekennzeichnet, daß die Einzelteile (2, 3; 13, 16, 19) durch erste und zweite mechanische Rastmittel (11, 11a, 11b, 12, 12a, 12b) miteinander verbunden sind, wobei das erste Rastmittel durch wenigstens eine Klinke (11, 11a, 11b) und das zweite mechanische Rastmittel durch wenigstens eine Hinterschneidung (12, 12a, 12b), die von der Klinke (11, 11a, 11b) erfaßt wird, gebildet ist.

2. Gasgenerator nach Anspruch 1 mit einem Gehäuse (1) aus folgenden Teilen:
a) einem schalenförmigen Unterteil (2), mit einer zylinderförmigen Innenwand (4) und einer zylinderförmigen Außenwand (5), wobei die Innen- und Außenwand (4, 5) koaxial zueinander ausgebildet sind,
b) einem schalenförmigen Oberteil (3), mit einer zylindrischen Innenwand (6) und einer zylindrischen Außenwand (7), wobei diese Innen- und Außenwand (6, 7) jeweils koaxial zu den zylindrischen Wänden (4, 5) des Unterteils (2) angeordnet sind, so daß eine ringförmige Brennkammer (8) entsteht,
c) einer Anzündeinheit (10), die in der durch die Innenwände (5, 6) des Unter- und Oberteils (2, 3) gebildeten Zündkammer (9) angeordnet ist,
gekennzeichnet durch folgende Merkmale:
d) zur Verbindung des Ober- und Unterteils (2, 3) weisen die Innen- und Außenwände (4, 5) des Unterteils (2) erste mechanische Rastmittel (11a, 11b) und die Innen- und Außenwände (6, 7) des Oberteils (3) zweite mechanische Rastmittel (12a, 12b) auf, die derart zusammenwirken, daß ein Klinkenverschluß entsteht.

3. Gasgenerator nach Anspruch 2 mit einem Unterteil (2), das im Bodenbereich der durch die zylindrische Innenwand (4) gebildeten Zündkammer (9) eine an die Anzündeinheit (19) angepaßte Öffnung (41) aufweist, dadurch gekennzeichnet, daß das Unterteil (2) im Randbereich der Öffnung (41) einen umlaufenden Sims (38) aufweist, der zusammen mit einer am äußeren Randbereich der zylindrischen Innenwand (6) des Oberteils (3) vorgesehenen umlaufenden Stufe (39) derart eine Ringnut (42) bildet, daß ein an der Anzündeinheit (19) umlaufender Wulst (40) von dieser Ringnut (42) aufgenommen wird.

4. Gasgenerator nach Anspruch 1 mit einem Gehäuse (1) aus folgenden Teilen:
a) einem Brennkammerzylinder (13) mit an den Stirnseiten offenen ersten und zweiten Öffnungen (14, 15), wobei die erste Öffnung (14) mit einem Deckel (16) verschlossen wird und in die zweite Öffnung (15) eine Anzündeinheit (19) eingebracht ist,
b) einem den Brennkammerzylinder (13) umgebenden zylindrischen Außengehäuse (17), wobei zwischen diesem Außengehäuse (17) und dem Brennkammerzylinder (13) Filtermittel (18) vorgesehen sind, gekennzeichnet durch folgende Merkmale:
c) zur Verbindung des Deckels (16) mit dem Brennkammerzylinder (13) weist der Deckel (16) das erste mechanische Rastmittel (11) und der Brennkammerzylinder (13) im Bereich von dessen erster Öffnung (14) das zweite mechanische Rastmittel (12) auf, die derart zusammenwirken, daR ein Klinkenverschluß entsteht.

5. Gasgenerator nach Anspruch 4, dadurch gekennzeichnet, daß zur Verbindung der Anzündeinheit (19) mit dem Brennkammerzylinder (13) die Anzündeinheit (19) erste mechanische Rastmittel (11) und der Brennkammerzylinder (13) im Bereich dessen zweiter Öffnung (15) zweite mechanische Rastmittel (12) aufweist, die derart zusammenwirken, daß ein Klinkenverschluß entsteht.

6. Gasgenerator nach einem der vorangehenden Ansprüche, dadurch gekennzeichnet, daR zur Abdichtung des Gasgenerators Dichtelemente (32) vorgesehen sind.

7. Gasgenerator nach Anspruch 6, dadurch gekennzeichnet, daß die Dichtelemente (32) in axialer Richtung des Gasgenerators zwischen den durch den Klinkenverschluß verbundenen Einzelteilen angeordnet und durch die Einzelteile verformt wird.

8. Gsgenerator nach einem der vorangehenden Ansprüche, dadurch gekennzeichnet, daß die ersten mechanischen Rastmittel als mehrere geschlitzte Klinken (11, 11a, 11b) ausgebildet sind.

9. Gasgenerator nach einem der Ansprüche 1 bis 7, dadurch gekennzeichnet, daß anstatt der wenigstens einen Klinke (11, 11a, 11b) und der wenigstens einen Hinterschneidung (12, 12a, 12b) ein Dreh-Bajonett-Verschluß vorgesehen ist.

## Claims

1. A gas generator, more particularly for passive restraint systems in motor vehicles, comprising a housing (1) having a plurality of individual parts (2, 3; 13, 16, 19) for forming an ignition chamber (9) and a combustion chamber (8), characterized in that the individual parts (2, 3; 13, 16, 19) are connected with one another by first and second mechanical latch means (11, 11a, 11b, 12, 12a, 12b), the first latch means being formed by at least one pawl (11, 11a, 11b) and the second mechanical latch means being formed by at least one undercut portion (12, 12a, 12b) engaged by the pawl (11, 11a, 11b).

2. The gas generator according to claim 1 comprising a housing (1) composed of the following parts:
a) a shell-shaped lower part (2) having a cylindrical inner wall (4) and a cylindrical outer wall (5), the inner and outer walls (4, 5) being coaxial with one another,
b) a shell-shaped upper part (3) having a cylindrical inner wall (6) and a cylindrical outer wall (7), these inner and outer walls (6, 7) being arranged coaxially with the respective ones of the cylindrical walls (4, 5) of the lower part (2) such that an annular combustion chamber (8) is formed,
c) an ignition unit (19) disposed in the ignition chamber (9) formed by the inner walls (4, 6) of the lower and upper parts (2, 3),
characterized by the following features:
d) for connecting the lower and upper parts (2, 3), the inner and outer walls (4, 5) of the lower part (2) include first mechanical latch means (11a, 11b) and the inner and outer walls (6, 7) of the upper part (3) include second mechanical latch means (12a, 12b) which cooperate such that a latching connection is formed.

3. The gas generator according to claim 2 comprising a lower part (2) having, in the region of the bottom of the ignition chamber (9) formed by the cylindrical inner wall (4), an opening (41) adapted to the ignition unit (19), characterized in that the lower part (2), in the region of the edge of the opening (41), comprises a continuous ledge (38) which together with a continuous step (39) provided at the outer edge region of the cylindrical inner wall (6) of the upper part (3) forms an annular groove (42) such that a bead (40) surrounding the ignition unit (19) is received in this annular groove (42).

4. The gas generator according to claim 1 comprising a housing (1) composed of the following parts:
a) a combustion chamber cylinder (13) comprising first and second openings (14, 15) open at the front faces, the first opening (14) being closed by a cover (16) and an ignition unit (19) being inserted in the second opening (15),
b) a cylindrical outer housing (17) surrounding the combustion chamber cylinder (13), with filter means (18) being provided between this outer housing (17) and the combustion chamber cylinder (13), characterized by the following features:
c) for connecting the cover (16) with the combustion chamber cylinder (13), the cover (16) comprises the first mechanical latch means (11) and the combustion chamber cylinder (13) comprises, in the region of the first opening (14) thereof, the second mechanical latch means (12), which cooperate such that a latching connection is formed.

5. The gas generator according to claim 4, characterized in that for connecting the ignition unit (19) with the combustion chamber cylinder (13), the ignition unit (19) comprises first mechanical latch means (11) and the combustion chamber cylinder (13) comprises, in the region of the second opening (15) thereof, second mechanical latch means (12), which cooperate such that a latching connection is formed.

6. The gas generator according to any one of the preceding claims, characterized in that sealing elements (32) are provided for sealing the gas generator.

7. The gas generator according to claim 6, characterized in that the sealing elements (32) are disposed axially in relation to the gas generator between the individual parts connected by the latching connection and are deformed by the individual parts.

8. The gas generator according to any one of the preceding claims, characterized in that the first mechanical latch means are configured as a plurality of slotted pawls (11, 11a, 11b).

9. The gas generator according to any one of claims 1 to 7, characterized in that a rotary bayonet locking connection is provided instead of the at least one pawl (11, 11a, 11b) and the at least one undercut portion (12, 12a, 12b).

## Revendications

1. Générateur de gaz, en particulier pour des systèmes passifs de retenue dans des véhicules à moteur, consistant en un boîtier (1) avec plusieurs pièces détachées (2, 3; 13, 16, 19) servant à former une chambre d'allumage (9) et une chambre de combustion (8), caractérisé en ce que les pièces détachées (2, 3; 13, 16, 19) sont reliées les unes aux autres par un premier et par un deuxième moyen mécanique d'encliquetage (11, 11a, 11b, 12, 12a, 12b), le premier moyen mécanique d'encliquetage étant constitué par au moins un loquet (11, 11a, 11b) et le deuxième moyen mécanique d'encliquetage étant constitué par au moins une contre-dépouille (12, 12a, 12b), qui est saisie par le loquet (11, 11a, 11b).

2. Générateur de gaz selon la revendication 1, avec un boîtier (1), constitué par les pièces suivantes:
a) une pièce inférieure en forme de coquille (2), avec une paroi intérieure (4) en forme de cylindre, et avec une paroi extérieure (5) en forme de cylindre, la paroi intérieure et la paroi extérieure (4, 5) étant constituées de façon coaxiale l'une par rapport à l'autre,
b) une partie supérieure en forme de coquille (3), avec une paroi intérieure cylindrique (6) et une paroi extérieure cylindrique (7), ces parois intérieure et extérieure (6, 7) étant disposées respectivement de façon coaxiale aux parois cylindriques (4, 5) de la pièce inférieure (2), de telle sorte que l'on obtienne une chambre de combustion (8) de forme annulaire,
c) une unité d'allumage (19), qui est disposée dans la chambre d'allumage (9), qui est formée par les parois intérieures (4, 6) de la pièce inférieure et de la pièce supérieure (2, 3),
caractérisé par les particularités suivantes:
d) pour relier la partie supérieure et la partie inférieure (2, 3), les parois intérieure et extérieure (4, 5) de la pièce inférieure (2) présentent des premiers moyens d'encliquetage (11a, 11b) et les parois intérieure et extérieure (6, 7) de la pièce supérieure (3) présentent des seconds moyens mécaniques d'encliquetage (12a, 12b), qui coopèrent de telle manière que l'on obtienne une fermeture à pêne.

3. Générateur de gaz selon la revendication 2, avec une pièce inférieure (2), qui présente dans la zone du fond de la chambre d'allumage (9), formée par la paroi intérieure cylindrique (4), une ouverture (41) adaptée à l'unité d'allumage (19), caractérisé en ce que la pièce inférieure (2) présente dans la zone de bordure de l'ouverture (41) un rebord (38) qui fait tout le tour, et qui forme en même temps qu'un gradin (39), faisant tout le tour, prévu sur la zone extérieure de bordure de la paroi intérieure cylindrique (6) de la pièce supérieure (3), une rainure annulaire (42) de telle manière qu'un bourrelet (40), faisant tout le tour sur l'unité d'allumage (19), soit reçu par cette rainure annulaire (42).

4. Générateur de gaz selon la revendication 1, avec un boîtier (1) constitué par les pièces suivantes:
a) un cylindre de chambre de combustion (13) avec un premier et un second orifice (14, 15) ouverts sur les faces frontales, le premier orifices (14) étant fermé par un couvercle (16) et une unité d'allumage (19) étant mise dans le deuxième orifice (15),
b) un boîtier extérieur cylindrique (17), qui entoure le cylindre (13) de la chambre de combustion, des moyens de filtration (18) étant prévus entre ce boîtier extérieur (17) et le cylindre (13) de la chambre de combustion, caractérisé par les particularités suivantes:
c) pour relier le couvercle (16) au cylindre (13) de la chambre de combustion, le couvercle (16) présente le premier moyen mécanique d'encliquetage (11) et le cylindre (13) de la chambre de combustion présente dans la zone de son premier orifice (14) le deuxième moyen mécanique d'encliquetage (12), moyens qui coopèrent d'une manière telle que l'on obtient une fermeture à pêne.

5. Générateur de gaz selon la revendication 4, caractérisé en ce que pour relier l'unité d'allumage (19) au cylindre (13) de la chambre de combustion, l'unité d'allumage (19) présente le premier moyen mécanique d'encliquetage (11) et le cylindre (13) de la chambre de combustion présente dans la zone de son deuxième orifice (15) le deuxième moyen mécanique d'encliquetage (12), moyens qui coopèrent d'une manière telle que l'on obtient une fermeture à pêne.

6. Générateur de gaz selon l'une des revendications précédentes, caractérisé en ce que pour rendre étanche le générateur de gaz on prévoit des éléments d'étanchéité (32).

7. Générateur de gaz selon la revendication 6, caractérisé en ce que les éléments d'étanchéité (32) sont disposés dans le sens axial du générateur de gaz entre les pièces détachées reliées par la fermeture à pêne et sont déformés par les pièces détachées.

8. Générateur de gaz selon l'une des revendications précédentes, caractérisé en ce que les premiers moyens mécaniques d'encliquetage sont constitués sous la forme de plusieurs loquets fendus (11, 11a, 11b).

9. Générateur de gaz selon l'une des revendications 1 à 7, caractérisé en ce que l'on prévoit à la place dudit au moins un loquet (11, 11a, 11b) et de ladite au moins une contre-dépouille (12, 12a, 12b) une fermeture tournante à baïonnette.
